# EUROPÄISCHE PATENTANMELDUNG

(11) **EP 1 640 050 A2**
(43) Veröffentlichungstag der Anmeldung: **29.03.2006**
(21) Anmeldenummer: 05450154.9
(22) Anmeldetag: 15.09.2005
(51) Int. Cl.: B01D 29/11, A01K 63/04

(54) **Filterkartusche**

(30) Priorität: 16.09.2004 AT 68104 U
(71) Anmelder: Dumencic, Johann, 8053 Graz (AT)
(72) Erfinder: Dumencic, Johann, 8053 Graz (AT)
(74) Vertreter: Babeluk, Michael

(57) **Zusammenfassung**

Die Erfindung betrifft eine Filterkartusche (1) für ein Schwimmbecken (3) mit einer Umwälzpumpe (4), welche in einem Skimmer (2) oder in einem Filtergehäuse einsetzbar ist. Erfindungsgemäß ist zur Verbesserung der Abscheiderate in der Filterkartusche (1) zumindest eine Öffnung (5) vorgesehen, durch die ein Teilstrom (6) der von der Umwälzpumpe (4) geförderten Wassermenge ungefiltert durchströmt.

## Beschreibung

Die Erfindung betrifft eine Filterkartusche für ein Schwimmbecken mit einer Umwälzpumpe, welche in einem Skimmer oder in einem Filtergehäuse einsetzbar ist.

Bei Schwimmbecken, welche im Skimmer oder in einem Filterbehälter eine herkömmliche Filterkartusche (meist ein Papierfilter mit unterschiedlichen Beschichtungen) aufweisen, werden Algen oder andere Schwebeteilchen nur unzureichend aus dem Wasserstrom gefiltert, da diese - bedingt durch die große Druckdifferenz am Filter bzw. die hohen Strömungsgeschwindigkeiten - großteils durch das Filter durchtreten. Ein Absenken der Pumpleistung bzw. ein Filter mit kleineren Poren zur Verhinderung dieser Missstände sind nicht zielführend, da dann die erforderlichen Umwälzmengen nicht erzielt werden können.

Es ist bekannt, die Schwimmbeckenpumpe über ein T-Stück einerseits mit dem Skimmer (mit Filtereinsatz) und andererseits z.B. mit einem Bodenablass des Beckens zu verbinden. Beide Leitungen weisen steuerbare Ventile auf, so dass die Wassermenge die durch die Filterkartusche strömt von 0 bis 100% eingestellt werden kann. Die skizzierte Lösung des Problems ist allerdings nur bei Schwimmbecken mit einem zweiten Anschluss (Bodenabfluss) möglich. Herkömmliche Aufstellbecken weisen keinen Bodenabfluss auf, so dass das Problem nach wie vor bestehen bleibt.

Aufgabe der Erfindung ist es eine Filterkartusche für ein Schwimmbecken vorzuschlagen, mit welcher ohne Umbauten am Schwimmbecken oder am Filtergehäuse vorzunehmen eine bessere Abscheiderate von Schwebeteilchen, insbesondere Algen, zu erzielen ist.

Diese Aufgabe wird erfindungsgemäß dadurch gelöst, dass in der Filterkartusche zumindest eine Öffnung vorgesehen ist, durch die ein Teilstrom der von der Umwälzpumpe geförderten Wassermenge ungefiltert durchströmt. Die Öffnung ist derart bemessen, dass 30 bis 70% der Fördermenge der Pumpe ungefiltert durchströmen können. Dadurch wird für die restlichen Strömungsanteile die Strömungsgeschwindigkeit am Filter und die Druckdifferenz deutlich herabgesetzt, so dass die Abscheiderate der im Wasser vorhandenen Schwebeteilchen (Algen) verbessert wird. Durch die fortwährende Umwälzung des Beckeninhaltes kommt es zu einer ausreichenden Filterung.

Da die Filterkartusche im Wesentlichen aus einer Hülse aus gefaltetem Filterpapier und einer kreisförmigen Deckplatte aus Kunststoff besteht, kann die zumindest eine Öffnung bevorzugt in der Deckplatte angeordnet sein.

Gemäß einer Weiterbildung der Erfindung, ist ein verschiebbares oder verdrehbares Element vorgesehen, mit welchem die zumindest eine Öffnung teilweise oder ganz geschlossen werden kann, um die Durchflussmenge auf einfache Weise steuern zu können.

Die Erfindung wird im Folgenden anhand einer zum Teil schematischen Darstellung näher erläutert.

Die Filterkartusche 1 ist in einem Skimmer 2 eingesetzt, welcher an einem Schwimmbecken 3 mit einer Umwälzpumpe 4 angeordnet ist. In der Filterkartusche 1 ist zumindest eine Öffnung 5 vorgesehen, durch die ein Teilstrom 6 (30 bis 70% der Fördermenge) der von der Pumpe 4 geförderten Wassermenge ungefiltert durchströmt. Die verbleibenden Teilströme 7 werden gefiltert und lagern die im Wasser 10 enthaltenen Schwebeteilchen an der Filterkartusche 1 ab.

Die Filterkartusche 1 besteht aus einer Hülse 8 aus gefaltetem Filterpapier und einer kreisförmigen Deckplatte 9, beispielsweise aus Kunststoff, in welcher die Öffnung 5 angeordnet ist. Es ist auch möglich mehrere Öffnungen 5 vorzusehen, welche einzeln verschlossen werden können um die Durchflussrate zu steuern.

Weiters ist ein verschiebbares oder verdrehbares Element 11 vorgesehen, mit welchem die zumindest eine Öffnung 5 teilweise oder ganz geschlossen werden kann.

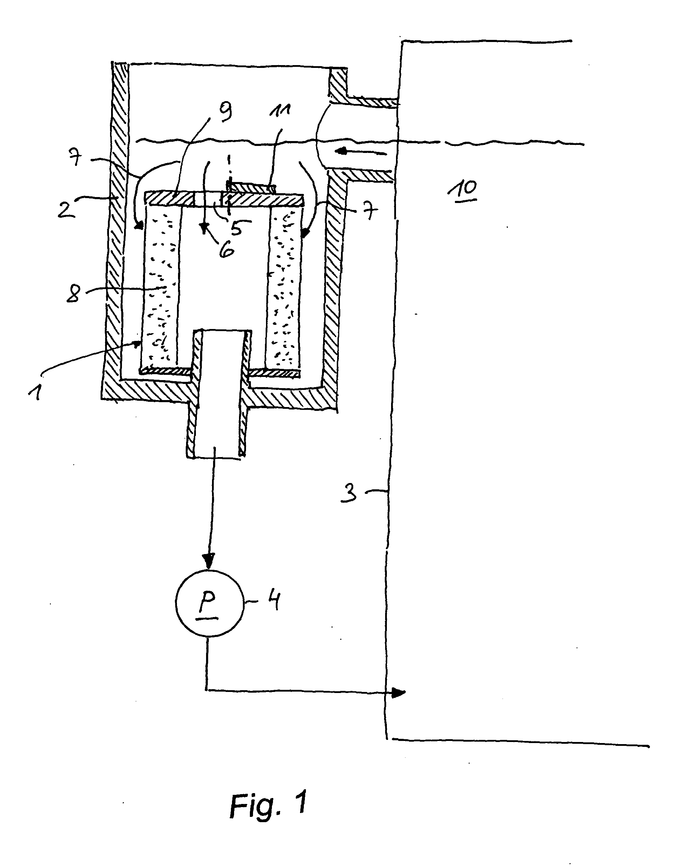

## Patentansprüche

1. Filterkartusche (1) für ein Schwimmbecken (3) mit einer Umwälzpumpe (4), welche in einem Skimmer (2) oder in einem Filtergehäuse einsetzbar ist, **dadurch gekennzeichnet, dass** in der Filterkartusche (1) zumindest eine Öffnung (5) vorgesehen ist, durch die ein Teilstrom (6) der von der Umwälzpumpe (4) geförderten Wassermenge ungefiltert durchströmt.

2. Filterkartusche (1) nach Anspruch 1, **dadurch gekennzeichnet, dass** die zumindest eine Öffnung (5) derart bemessen ist, dass 30 bis 70% der Fördermenge der Umwälzpumpe (4) ungefiltert durchströmen.

3. Filterkartusche (1) nach Anspruch 1 oder 2, **dadurch gekennzeichnet, dass** die zumindest eine Öffnung (5) in einer kreisförmigen Deckplatte (9) der Filterkartusche (1) angeordnet ist.

4. Filterkartusche (1) nach einem der Ansprüche 1 bis 3, **dadurch gekennzeichnet, dass** ein verschiebbares oder verdrehbares Element (11) vorgesehen ist, mit welchem die zumindest eine Öffnung (5) teilweise oder ganz geschlossen werden kann.
